Europäisches Patentamt

European Patent Office

Office européen des brevets

(19)

(11) Veröffentlichungsnummer: **0 161 658**
A2

# (12) EUROPÄISCHE PATENTANMELDUNG

(21) Anmeldenummer: 85105868.5

(22) Anmeldetag: 13.05.85

(51) Int. Cl.⁴: **G 01 N 31/00**

(30) Priorität: 14.05.84 DE 3417848

(43) Veröffentlichungstag der Anmeldung: 21.11.85
Patentblatt 85/47

(84) Benannte Vertragsstaaten: **AT BE CH DE FR GB IT LI NL SE**

(71) Anmelder: **Fraunhofer-Gesellschaft zur Förderung der angewandten Forschung e.V., Leonrodstrasse 54, D-8000 München 19 (DE)**

(72) Erfinder: **Kaiser, Alfred, Dr., Am Rosengarten 18, D-8702 Kist (DE)**
Erfinder: **Schmidt, Helmut, Dr., Tilman-Riemenschneider-Strasse 15, D-8706 Höchberg (DE)**

(74) Vertreter: **Barz, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40 (DE)**

(54) Verfahren zur Beurteilung, Überwachung und/oder Regelung von fluoridhaltigen Bädern.

(57) Zur analytischen Bewertung von fluoridhaltigen Behandlungsbädern für Gläser oder Metalle bestimmt man $H_2SiF_6$ entweder a) durch Ausfällen der vorhandenen $SiF_6^{2-}$-Ionen als $K_2SiF_6$, Wiederauflösen des ausgefällten Salzes und potentiometrische Bestimmung des Fluoridgehaltes oder b) durch Überführen der vorhandenen $SiF_6^{2-}$-Ionen in einen $SiO_2$-Molybdatokomplex und photometrische Bestimmung des Komplexes; HF durch Bestimmung des Gesamt-Fluoridgehaltes und Subtraktion des in Form von $SiF_6^{2-}$-komplexgebundenen Fluorids; und andere Säuren durch Bestimmung der Gesamt-Säurekonzentration und Subtraktion der auf den Gehalt an HF und $H_2SiF_6$ zurückgerechneten Säureanteile. Gegebenenfalls werden in Abhängigkeit von dem jeweils zu behandelnden Material auch Kationen bestimmt, die mit den im Bad vorhandenen Anionen Niederschläge bilden können. Die Verfahrensschritte können ganz oder teilweise automatisiert werden, wobei die Erfassung und/oder Auswertung der analytischen Meßdaten über EDV erfolgen kann.

**Verfahren zur Beurteilung, Überwachung und/oder Regelung von fluoridhaltigen Bädern**

Die Erfindung betrifft ein Verfahren zur Beurteilung, Überwachung und/oder Regelung von fluoridhaltigen Bädern zum Behandeln von Gläsern, insbesondere Säurepolitur- und Mattierbädern, oder zum Behandeln von Metallen und Metallegierungen, insbesondere Beizbädern.

Die Säurepolitur zur Veredelung von geschliffenen oder gepreßten Glasgegenständen ist ein seit langer Zeit bekanntes Verfahren. Die Glasgegenstände, vor allem hochwertige Bleikristallglas- und Kristallglasartikel, werden dabei in einem Gemisch aus Schwefelsäure und Flußsäure bei erhöhter Temperatur so lange bewegt (gegebenenfalls unterbrochen von einer oder mehreren Zwischenspülungen), bis die Rauhigkeiten abgetragen sind und die Oberflächen den gewünschten Hochglanz aufweisen. Schwierigkeiten bereitet bei diesem Verfahren aber bisher die objektive Beurteilung des Polierbadzustandes, von dem letztendlich die Qualität des erzielbaren Polierergebnisses abhängt. Als objektive Meßgröße für diese Beurteilung steht in der Regel nur die Dichte des Polierbades zur Verfügung; siehe z.B. DE-OS 20 58 398. Allerdings ist die Dichte kein aussagekräftiges Kriterium für die Polierfähigkeit des Bades. In der Praxis beruht daher die Steuerung des Prozesses auf subjektiven Kriterien, nämlich der Erfahrung des Bedienungspersonals sowie einer nachträglichen Beurteilung der Qualität der polierten Glasoberfläche. Dies reicht jedoch nicht aus, um allmähliche Veränderungen im Polierbad, wie sie z.B. durch Aufkonzentrationen von Reaktionsprodukten auftreten können, zu erfassen. Infolgedessen können z.B. Löslichkeitsgrenzen von Salzen überschritten werden, die sich auf der Glasoberfläche absetzen und einen gleichmäßigen Fortgang des Polierprozesses behindern. Solche kritischen Badzustände werden erst dann erkannt, wenn bereits Fehlpolituren auftreten.

Für eine hinreichend objektive Beurteilung eines Polierbades ist die Kenntnis der Gehalte an Schwefelsäure ($H_2SO_4$) und Flußsäure (HF) unbedingt notwendig, da beide Säurekonzentrationen in engen Bereichen konstant gehalten werden müssen und die zulässigen Bandbreiten noch wechselseitig voneinander abhängen. Außerdem muß die Konzentration an gelöstem Silicofluorid ($SiF_6^{2-}$) bekannt sein, das als Reaktionsprodukt bei der Auflösung des silicatischen Glasnetzwerkes entsteht. Dazu kommt der Gehalt an den Alkaliionen $K^+$ und $Na^+$, die in praktisch jedem säurepolierten Glas enthalten sind und mit dem $SiF_6^{2-}$ schwerlösliche Niederschläge bilden können. In einer Reihe von Gläsern sind zusätzlich noch die Erdalkaliionen $Ca^{2+}$ und $Ba^{2+}$ enthalten, deren Sulfate und Fluoride ebenfalls schwerlöslich sind. Bei Überschreiten der Löslichkeitsgrenze einer Verbindung im Polierbad bilden sich Niederschläge, die sich bevorzugt auf den Schliffflächen an der Glasoberfläche absetzen und zu Fehlpolituren führen (z.B. sog. "angelegte" Stellen). Für andere Glasbehandlungsverfahren kann die Bestimmung weiterer Kationen, wie z. B. $NH_4^+$, erforderlich werden.

In der Literatur sind einige Verfahren beschrieben, die eine parallele Bestimmung von Schwefelsäure und Flußsäure ermöglichen, die sich aber nicht auf die Säurepolitur oder das Mattieren von Gläsern beziehen und bei denen das Problem des gleichzeitigen Vorliegens von freien und komplexen Fluoridionen und deren getrennte Bestimmung nicht gelöst wird; siehe J. Bessiere und Y. Pillet, Verres Refract., Bd. 32 (1978) S. 24 und Orion Research Applications Bulletin Nr. 4 (1970).

Andererseits liegen Arbeiten über die Bestimmung von freiem neben komplexgebundenem Fluorid oder von $SiF_6^{2-}$- Komplexen in verschiedenen Matrices vor; siehe D.E. Jordan, J. Assoc. Offic. Agr. Chemists, Bd. 53 (1970) S. 447 und W. Augustin et al., Chemia Analityczna, Bd. 22 (1977) S. 653. Dabei handelt es sich jedoch um völlig andere Konzentrationsbereiche als bei der Säurepolitur üblich und eine gleichzeitige Anwesenheit einer weiteren starken Säure in großem Überschuß wird nicht berücksichtigt.

Eine Bestimmung des Flußsäuregehaltes einerseits und der Summe aus $H_2SO_4$ und $H_2SiF_6$ andererseits ist ebenfalls beschrieben worden, siehe E.V. Bezrogova, Zh. anal. Khim., Bd. 19 (1964) S. 1498, doch gestattet die damit erhältliche Information keine ausreichende Steuerung eines Säurepolier- oder Mattierbades für Gläser.

In der Glasindustrie bzw. in analytischen Labors, die mit derartigen Fragestellungen konfrontiert sind, gab es bisher verschiedene Ansätze zur Lösung des Problems. Sie reichen von komplizierten iterativen Berechnungen, die auf Dichtemessungen basieren, über Säuretitrationen nach verschiedenen Vorbehandlungen bis zur Kombination von Fällungsreaktionen mit elektrochemischen Bestimmungsmethoden. Diese Verfahren sind jedoch teilweise nicht zuverlässig genug oder verlangen ein gut ausgerüstetes analytisches Labor mit geschultem Personal. Solche Voraussetzungen sind in der Glasindustrie in aller Regel nicht gegeben. Entscheidend aber ist, daß kein bisher bekanntes Analysenverfahren die Bestimmung aller für eine Beurteilung des gesamten Badzustandes notwendigen Parameter auch nur annähernd in einer so kurzen Zeit erlaubt, daß es direkt für eine Badsteuerung eingesetzt werden kann. Dazu ist es erforderlich, daß zwischem dem Zeitpunkt der Probenahme und dem Vorliegen der ausgewerteten Analysenergebnisse nicht mehr als ein Polierzyklus, der in der Regel etwa 15 bis 30 Minuten dauert, abläuft. Selbst die am besten ausgearbeiteten bisher bekannten Methoden benötigen für eine Bestimmung von HF, $H_2SiF_6$ und $H_2SO_4$ (ohne Kationenanalytik) mehrere Stunden Arbeit in einem gut ausgerüsteten Labor. Die Bestimmung von $K^+$, $Na^+$, $NH_4^+$, $Ca^{2+}$ und $Ba^{2+}$ ist zwar in jedem analytischen Lehrbuch beschrieben, doch für Säurepolier- und Mattierbäder existiert ebenfalls keine ausgearbeitete Methode.

Analoge Probleme bestehen bei Bädern zur Oberflächenbehandlung, z.B. zum Beizen, Entzundern, Aktivieren oder elektrochemischen Polieren und Entgraten, von Metallen wie Gußeisen, Edelstählen, Aluminium und Aluminiumlegierungen. Auch hier wird meist Flußsäure in Kombination mit einer anderen starken Säure eingesetzt. Ferner kann Silicium als Legierungsbestandteil oder als Verunreinigung in das Metallbehandlungsbad gelangen und $SiF_6^{2-}$ bilden. Es besteht somit ebenfalls die Notwendigkeit, dieses komplexgebundene Fluorid zu bestimmen, um eine Aussage über die tatsächliche Flußsäure-Konzentration zu gewinnen.

Ziel der vorliegenden Erfindung war es daher, eine sehr schnelle und zuverlässige, dabei aber gleichzeitig einfache Bestimmungsmethode für die relevanten Komponenten von fluoridhaltigen Bädern zu entwickeln. Sie sollte z.B. so rasch arbeiten, daß bereits nach Ablauf eines Behandlungszyklus, der bei der Säurepolitur von Gläsern in der Regel nicht länger als 30 Minuten in Anspruch nimmt, die ausgewerteten Daten der letzten Analyse zur Verfügung stehen und für die Badregelung eingesetzt werden können. Die Analytik sollte darüber hinaus so gestaltet sein, daß die einzelnen Verfahrensschritte und die verwendeten Analysengeräte problemlos in eine automatische arbeitende Meß- und Regeleinheit für den gesamten Prozeß integriert werden können.

Gegenstand der Erfindung ist das im Hauptanspruch gekennzeichnete Verfahren. Bevorzugte Ausgestaltungen dieses Verfahrens sind Gegenstand der Unteransprüche.

Bei der Bestimmung des gelösten Anteils an komplexen Fluoriden waren besondere Schwierigkeiten zu erwarten, da hier die Aussagen aus der Literatur darauf hindeuten, daß der

$SiF_6^{2-}$-Komplex sehr stabil und einer Analytik nur schwer zugänglich sein sollte; siehe Gmelins Handbuch der Anorganischen Chemie, Silicium Teil B, System Nr. 15, S. 646 und die dort zitierte Literatur.

Überraschenderweise wurde nun gefunden, daß es möglich ist, diesen Komplex als Kaliumsalz auszufällen, abzutrennen und durch Verwendung eines geeigneten Puffers, z.B. Acetat-Puffer (pH 5) wieder aufzulösen, wobei rasche Dekomplexierung erfolgt. In diesem Puffer kann dann der Fluorgehalt gemessen und auf den ursprünglichen $SiF_6^{2-}$-Gehalt zurückgerechnet werden.

Diese Analysenmethode ist schnell, genau und zuverlässig und eignet sich für die nicht-automatisierte Durchführung des erfindungsgemäßen Verfahrens.

Für den Einsatz in einem automatisierten Verfahren ist sie in der beschriebenen Form weniger geeignet, da der Fällungs- und Abtrennschritt nur sehr schwer mechanisierbar ist. Infolgedessen wurde versucht, den $SiF_6$-Gehalt über die Bestimmung des gelösten Siliciumanteils zu ermitteln. Eine rasch durchführbare und sehr einfach automatisierbare Bestimmungsmethode für Silicium in wäßrigen Lösungen ist die quantitative Messung eines $SiO_2$-Molybdatokomplexes auf photometrischem Wege. Es waren hier jedoch Schwierigkeiten zu erwarten, da die Einstellung und Entwicklung des Farbkomplexes, der zur Messung verwendet wird, genau in dem pH-Bereich erfolgt, in dem auch der $SiF_6$-Komplex überaus stabil ist. Außerdem ist in der Literatur beschrieben, daß für die Entwicklung dieses Farbkomplexes ein Zeitraum von mindestens 15 Minuten erforderlich ist, siehe M.M. Piryutko, N.V. Benediktova und L.F. Korsak, Glass Ceram. N.Y. Consultants Bureau Transl., Bd. 38 (1981) S. 439-441; Analytisches Laboratorium Metallgesellschaft AG., Analysenvorschrift $SiO_2$ 1/IV/62 (1962); F. Gebhardt und S. Kimmel, Glastechn. Ber., Bd. 36 (1963) S. 212 und E. Winter, Glastechn. Ber., Bd. 41 (1968) S. 522.

Überraschenderweise zeigte sich, daß es bei Zugabe eines ca. 50-fachen Überschusses einer 5%igen Borsäurelösung, Zugabe eines zweifachen Überschusses an Acetat-Puffer (pH 3) sowie Zugabe eines fünffachen Überschusses einer 6%igen Ammoniumheptamolybdatlösung (die Überschußangaben beziehen sich jeweils auf die Verhältnisse der Volumina von Reagenz und eingesetzter Probe) möglich ist, den $SiF_6$-Komplex quantitativ zu zerstören und den $SiO_2$-Molybdatokomplex so rasch auszubilden, daß die Messung nicht mehr als 10 bis 12 Minuten nach dem Zeitpunkt der Probenahme abgeschlossen ist. Bei automatischer Datenerfassung und Auswertung ist es daher möglich, diese Bestimmung in ein automatisch ablaufendes Behandlungsverfahren so zu integrieren, daß die Forderung nach einer Gesamtanalysenzeit von weniger als 20 bis 40 Minuten möglich ist. Nach der $SiO_2$-Bestimmung kann leicht auf den ursprünglichen $SiF_6^{2-}$-Gehalt zurückgerechnet werden.

Die weiteren Bestimmungen können parallel zu der $SiF_6$-Bestimmung erfolgen. Die Bestimmung der freien Flußsäure erfolgt über eine potentiometrische Fluoridmessung ohne vorherige Abtrennung des komplexen Silicofluorides $SiF_6^{2-}$. Bei der Einstellung der Meßbedingungen wird dabei das komplexe Silicofluorid zerstört, und es wird der Gesamtfluoridgehalt in der Lösung gemessen. Der Gehalt an freiem Fluorid läßt sich durch Differenzbildung zwischen Gesamt-Fluoridgehalt und dem Gehalt an komplexem Fluorid berechnen.

Der Gehalt einer anderen Säure, wie $H_2SO_4$, $HNO_3$, HCl oder $H_3PO_4$, wird ebenfalls rechnerisch bestimmt, wobei zusätzlich zu der Erfassung der freien Flußsäure und der Hexafluorokieselsäure eine Gesamtsäurebestimmung erforderlich ist, die beispielsweise durch eine potentiometrische Titration erfolgen kann. Durch Subtraktion der Gehalte an Flußsäure und Hexafluorokieselsäure von der bestimmten Gesamt-Säurekonzentration erhält man die Konzentration der anderen Säure.

Bei Anwesenheit mehrerer anderer Säuren können entweder nur deren Gesamt-Konzentration oder aber die einzelnen Säureanteile bestimmt werden. Letzteres kann dadurch erfolgen, daß man die jeweiligen Säure-Anionen bestimmt, z.B. durch potentiometrische Bestimmung von $NO_3^-$ oder $Cl^-$. Es besteht auch die Möglichkeit, in einer Mischung mit x anderen Säuren die Anionen von (x-1) Säuren zu bestimmen und die Konzentration der restlichen Säure durch Substraktion von der Gesamt-Säurekonzentration zu berechnen.

In einer weiteren Ausführungsform des erfindungsgemäßen Verfahrens werden zusätzlich Kationen bestimmt, die für die Beurteilung, Überwachung und/oder Regelung der Bäder relevant sind. Dies sind bei Behandlungsbädern für Metalle, wie Gußeisen, Edelstähle, Aluminium oder Aluminiumlegierungen, die entsprechenden Metallionen, z.B. $Al^{3+}$, $Fe^{3+}$, $Cu^{2+}$, $Mn^{2+}$, $Cr^{3+}$, $Cr^{6+}$, $Ni^{2+}$, $Ca^{2+}$, $Mg^{2+}$, $Mo^{6+}$ und $V^{5+}$. Bei Behandlungsbädern für Gläser handelt es sich in erster Linie um Alkali- und Erdalkalimetallionen, wie $Na^+$ und $K^+$, sowie um Ammoniumionen.

Die Bestimmung der Kationen ist z.B. mit potentiometrischen oder photometrischen Methoden möglich. Bei Bädern zur Behandlung von Gläsern ist dabei überraschend, daß es trotz der zu erwartenden starken Querempfindlichkeiten der Alkali- bzw. Erdalkaliionen untereinander und der sehr großen Matrixeffekte gelingt, z.B. Kalium und Natrium nebeneinander zu bestimmen. Aus der einschlägigen Literatur war dagegen zu entnehmen, daß eine hinreichend zuverlässige und reproduzierbare Bestimmungsmethode dieser Art nahezu unmöglich sein sollte; siehe Orion Research Analytischer Methoden-Führer, 9. Ausgabe (1979).

Somit liegen alle für die Beurteilung des Badzustandes erforderlichen Daten komplett vor, und durch direkten Vergleich mit vorgegebenen Sollwerten kann die Nachdosierung bzw. Regelung des Bades erfolgen.

Das erfindungsgemäße Verfahren eignet sich zur analytischen Bewertung und Steuerung von fluoridhaltigen Bädern zum Behandeln von Gläsern, z.B. zum Säurepolieren von Bleikristallglas und Kristallglas oder zum Mattieren von Flachglas, sowie zum Behandeln, z.B. Beizen, Entzundern, Aktivieren oder elektrochemischen Polieren und Entgraten, von Metallen, wie Gußeisen, Edelstählen, Aluminium und Aluminiumlegierungen.

Die analytischen Bestimmungen werden gewöhnlich unter thermostatisierten Bedingungen, vorzugsweise bei 25°C, durchgeführt. Für die analytischen Bestimmungen werden vorzugsweise elektrochemische (insbesondere potentiometrische) und/oder photometrische Methoden angewandt.

Ein, mehrere oder alle Verfahrensschritte des erfindungsgemäßen Verfahrens von Probenahme, analytischen Bestimmungen, Datenerfassung, Auswertung und darauf basierender Steuerung und/oder Regelung des Bades können automatisch erfolgen. Die Erfassung der analytischen Meßdaten und/oder ihre Auswertung können über EDV erfolgen.

Das erfindungsgemäße Verfahren hat den Vorteil, daß es in kurzer Zeit, z.B. innerhalb eines normalen Säurepolierzyklus für Gläser von 15 bis 20 Minuten, die für die Bewertung und Steuerung des Bades relevanten Meßdaten liefert. Die erhaltenen Daten können zur Steuerung und/oder Regelung eines oder mehrerer Bäder verwendet werden. Hierbei können alle Verfahrensschritte von ungeübtem Personal nach kurzer Einarbeitung mit handelsüblichen Geräten durchgeführt werden.

Die folgenden Beispiele und Bezugsbeispiele erläutern die Erfindung.

Bezugsbeispiel 1   (Bestimmung von $H_2SiF_6$ über Fällung als Kaliumsalz)

1 ml der thermostatisierten Probe wird mit 5 ml einer kalt gesättigten Kaliumnitratlösung und mit 1 ml Methanol versetzt und 10 Minuten im Eisbad gekühlt. Danach wird der Niederschlag abzentrifugiert, mit wenig kalter Kaliumnitratlösung gewaschen und erneut zentrifugiert. Die beiden Zentrifugate werden vereinigt. Der Niederschlag wird mit 10 ml Acetat-Puffer (pH 5) aufgelöst und die Lösung mit Wasser auf 100 ml aufgefüllt. Aus dieser Lösung wird 1 ml entnommen und mit 19 ml $H_2O$ und 20 ml Acetat-Puffer verdünnt. 20 ml der vereinigten Zentrifugate werden mit 20 ml Acetat-Puffer versetzt. Beide Lösungen werden mit einer Fluoridionen-sensitiven Elektrode (mit Lanthanfluorid-Kristallmembran) auf ihren Fluoridgehalt gemessen. Der Fluoridgehalt des wieder in Lösung gebrachten Niederschlags wird auf den ursprünglich vorhandenen $H_2SiF_6$-Gehalt umgerechnet. Der Fluoridgehalt der Zentrifugate ergibt den ursprünglich vorhandenen Anteil an freier Flußsäure. Die Summe beider berechneter Werte muß mit dem Gesamt-Fluoridgehalt der Originalprobe übereinstimmen, deren zusätzliche Messung eine Kontrolle des Analysenablaufs darstellt.

Bezugsbeispiel 2   (Bestimmung von $H_2SiF_6$ durch Photometrie des $SiO_2$-Molybdatokomplexes)

1 ml der thermostatisierten Polierbadprobe wird mit 30 ml $H_2O$, 40 ml einer 5%igen Borsäurelösung und 2 ml eines Acetat-Puffers (pH 3) versetzt. Dazu werden 5 ml einer 6%igen Ammoniumheptamolybdatlösung gegeben und die Mischung auf 100 ml aufgefüllt. Man wartet etwa 5 bis 10 Minuten, bis sich der gelbe $SiO_2$-Molybdatokomplex ausgebildet hat und mißt an einem Photometer die Extinktion bei einer Wellenlänge von 400 nm gegen die einer Blindprobe. Aus dem so ermittelten Gehalt an $SiO_2$ kann der ursprüngliche Gehalt der Polierbadprobe an Hexafluorokieselsäure berechnet werden.

0 161 658

Beispiel 1 (Manuelle Bestimmung)

Aus einem Säurepolierbad für Gläser wird eine Probe von ca. 10 ml manuell entnommen. Davon wird mit jeweils 1 ml die Dichte (gravimetrisch), der Gehalt an freiem Fluorid (potentiometrisch), der Gehalt an komplexgebundenem Fluorid (gemäß Bezugsbeispiel 1), der Gesamt-Säuregehalt (potentiometrische Titration) sowie der Gehalt an Kalium und Natrium (potentiometrisch) gemessen. Aus dem Gesamt-Säuregehalt und dem Gehalt an freier Flußsäure und komplexiertem Fluorid wird die Konzentration der Schwefelsäure bestimmt. Alle Angaben werden mit einem einfachen Auswerteprogramm direkt in Gew.-%-Einheiten umgerechnet.

Beispiel 2 (Manuelle Bestimmung mit automatischer Datenerfassung)

Die Analytik wird wie in Beispiel 1 durchgeführt, jedoch sind die einzelnen Meßgeräte (Potentiometer und Waage) direkt mit einem Datenerfassungssystem (z.B. MINC-System der Firma DEC mit integriertem Analog-Digitalwandler) gekoppelt. Ein einfaches Programm nimmt die umgewandelten Meßwerte auf und berechnet daraus direkt die gewünschten Konzentrationsangaben in Gew.-%-Einheiten.

Beispiel 3

Aus einem permanent umgepumpten Teilkreislauf eines Säurepolierbades für Gläser wird mit Hilfe einer Dosierpumpe jeweils eine Teilprobe in ein Wägesystem sowie in ein Betriebsmeßsystem zur potentiometrischen Bestimmung des Fluoridgehaltes gebracht.

Weitere Teilproben werden in einen Prozeßtitrierautomaten zur Bestimmung der Gesamtsäure, in potentiometrische Anlagen zur Bestimmung von Kalium und Natrium sowie in ein Prozeßphotometer zur Bestimmung des komplexgebundenen Fluorids gemäß Bezugsbeispiel 2 gegeben. Die Konditionierungs- und Meßschritte werden in diesen Teilsystemen automatisch durchgeführt und die entsprechenden Meßwerte über analoge Schnittstellen zur Verfügung gestellt. Ein Kleinrechner (z.B. System MINC der Firma DEC) erfaßt die Daten über eine Analog-Digitalwandlung und berechnet daraus die einzelnen Konzentrationen. Durch direkten Vergleich mit vorgegebenen Sollwerten wird sofort die nachzudosierende Menge an Flußsäure bzw. Schwefelsäure berechnet und in geeigneter Weise ausgegeben.

Beispiel 4

Aus einem Beizbad für das chemische Entgraten von Edelstählen wird eine Probe von ca. 10 ml entnommen. Davon wird mit jeweils 1 ml die Dichte (gravimetrisch), der Gesamtfluoridgehalt (potentiometrisch), der Gehalt an komplexgebundenem Fluorid (gemäß Bezugsbeispiel 1) und der Gehalt an $HNO_3$ (photometrisch) bestimmt. Aus der Differenz zwischen Gesamtfluoridgehalt und komplexgebundenem Fluorid wird der Gehalt an freiem Fluorid berechnet. Mit Hilfe der ermittelten Dichte werden alle Konzentrationen in Gew.-%-Einheiten umgerechnet.

-12-                                    **0 161 658**

**P a t e n t a n s p r ü c h e**

1. Verfahren zur Beurteilung, Überwachung und/oder Regelung von fluoridhaltigen Bädern durch Bestimmung des
Gehaltes an HF, $H_2SiF_6$ und einer oder mehreren anderen
Säuren, dadurch g e k e n n z e i c h n e t , daß man
$H_2SiF_6$ entweder

   a) durch Ausfällen der vorhandenen $SiF_6^{2-}$-Ionen als
   $K_2SiF_6$, Wiederauflösen des ausgefällten Salzes und
   potentiometrische Bestimmung des Fluoridgehaltes
   oder

   b) durch Überführen der vorhandenen $SiF_6^{2-}$-Ionen in
   einen $SiO_2$-Molybdatokomplex und photometrische Bestimmung des Komplexes,

   HF durch Bestimmung des Gesamt-Fluoridgehaltes und Subtraktion des in Form von $SiF_6^{2-}$ komplexgebundenen Fluorids und

   die andere(n) Säure(n) durch Bestimmung der Gesamt-
   Säurekonzentration und Subtraktion der auf den Gehalt
   an HF und $H_2SiF_6$ zurückgerechneten Säureanteile bestimmt.

2. Verfahren nach Anspruch 1, dadurch gekennzeichnet, daß
   es auf fluorhaltige Bäder für die Behandlung von Gläsern angewandt wird.

3. Verfahren nach Anspruch 2, dadurch gekennzeichent, daß
   die andere Säure $H_2SO_4$ ist.

4. Verfahren nach Anspruch 1, dadurch gekennzeichnet, daß
   es auf fluorhaltige Bäder zur Behandlung von Metallen
   oder Metallegierungen angewandt wird.

5. Verfahren nach Anspruch 4, dadurch gekennzeichnet, daß
   die andere(n) Säure(n) HCl, $HNO_3$ und/oder $H_3PO_4$ ist.

6. Verfahren nach einem der Ansprüche 1 bis 5, dadurch gekennzeichnet, daß man im Falle von mehreren anderen Säuren zusätzlich die einzelnen Säureanteile bestimmt.

7. Verfahren nach einem der Ansprüche 1 bis 6, dadurch gekennzeichnet, daß man zusätzlich den Gehalt an Kationen, die mit den im Bad vorhandenen Anionen Niederschläge bilden können, bestimmt.

8. Verfahren nach Anspruch 7, dadurch gekennzeichnet, daß man im Falle von Bädern für die Behandlung von Gläsern Alkalimetall-, Erdalkalimetall- und/oder Ammonium-Kationen bestimmt.

9. Verfahren nach Anspruch 7, dadurch gekennzeichnet, daß man im Falle von Bädern für die Behandlung von Metallen oder Metallegierungen Metall-Kationen bestimmt.

10. Verfahren nach einem der Ansprüche 1 bis 9, dadurch gekennzeichnet, daß man die Bestimmung des Gesamt-Fluoridgehaltes, der Gesamt-Säurekonzentration der einzelnen Säureanteile und der Kationen elektrochemisch und/oder photometrisch durchführt.

11. Verfahren nach Anspruch 10, dadurch gekennzeichnet, daß man die Bestimmung potentiometrisch durchführt.

12. Verfahren nach einem der Ansprüche 1 bis 11, dadurch gekennzeichnet, daß ein, mehrere oder alle Verfahrensschritte von Probenahme, analytischen Bestimmungen, Datenerfassung, Auswertung und darauf basierender Steuerung und/oder Regelung des Bades automatisch erfolgen.

13. Verfahren nach einem der Ansprüche 1 bis 12, dadurch gekennzeichnet, daß die Erfassung der analytischen Meßdaten und/oder ihre Auswertung über EDV erfolgen.

14. Verfahren nach einem der Ansprüche 1 bis 13, dadurch gekennzeichnet, daß man die Ergebnisse der analytischen Bestimmung zur Steuerung und/oder Regelung eines oder mehrerer Bäder verwendet.

15. Verfahren nach Anspruch 14, dadurch gekennzeichnet, daß die Steuerung und/oder Regelung durch Nachdosieren von Frischsäuren erfolgt.